# EUROPEAN PATENT APPLICATION

(11) **EP 3 585 107 A1**
(43) Date of publication of application: **25.12.2019**
(21) Application number: 18751236.3
(22) Date of filing: 09.02.2018
(51) Int. Cl.: H04W 48/16

(54) **MULTI-ACCESS MANAGEMENT IMPLEMENTATION METHOD AND DEVICE, AND COMPUTER STORAGE MEDIUM**

(30) Priority: 10.02.2017 CN 201710073840
(71) Applicant: ZTE Corporation, Shenzhen, Guangdong 518057 (CN)
(72) Inventor: ZHOU, Xingyue, Shenzhen Guangdong 518057 (CN); ZHU, Jinguo, Shenzhen Guangdong 518057 (CN); LIANG, Shuang, Shenzhen Guangdong 518057 (CN)
(74) Representative: Rosenberg, Muriel Sylvie
(86) International application number: PCT/CN2018/076039
(87) International publication number: WO 2018/145654

(57) **Abstract**

Disclosed are a multi-access management implementation method and device, the method including: a core network recognizing that a UE has a multi-access capacity; the UE being registered to the core network over a first access network or a second access network, and the core network establishing a PDU connection over the first access network or the second access network, the established PDU connection and a PDU connection that has been established by the UE over the second access network or the first access network belong to a same PDU session; or during a procedure that the UE requests to establish a PDU session over the first access network or the second access network, the core network establishing a PDU connection of the PDU session over the second access network or the first access network simultaneously. Embodiments of the present application also provide a computer storage medium.

## Description

### CROSS-REFERENCE TO RELATED APPLICATION

The present application is based on and claims priority to Chinese Patent Application No. 201710073840.4 filed on February 10, 2017, the disclosure of which is hereby incorporated by reference in its entirety.

### TECHNICAL FIELD

The present invention relates to the next-generation mobile communication technology, and more particularly, to a method, device and computer storage medium for implementing multi-access management.

### BACKGROUND

For mobile communications, the next-generation communication system (Next Gen System) is currently being researched. The next-generation communication system can support three types of services with different network characteristics: Evolved Mobile Broadband (eMBB), Massive Machine Type Communication (mMTC), and Ultra Reliable Machine Type Communication (uMTC). Network slicing is a very critical technology in the next-generation communication system. Network slicing refers to network functions and related resources deployed by operators to provide a specific service. The operators can deploy different network slicing instances for different service types, and deploy different network slicing instances for different tenants. Network slicing technology helps to realize a mode that the network is provided to users as a service, that is, the operators can provide connection service to the physical network in a form of "network as a service" in order to meet broad needs of more network use cases in the future.

In order to fully meet the user's need for convenient, fast and efficient access to the network, in next-generation network access methods, in addition to 3GPP radio access technology, the next-generation network system also provides non-3GPP access technologies (such as WLAN, broadband fixed network, etc.), which are services for connecting to the next-generation core network, as a powerful complement to the 3GPP access air interface resource, so as to provide users with a better access experience.

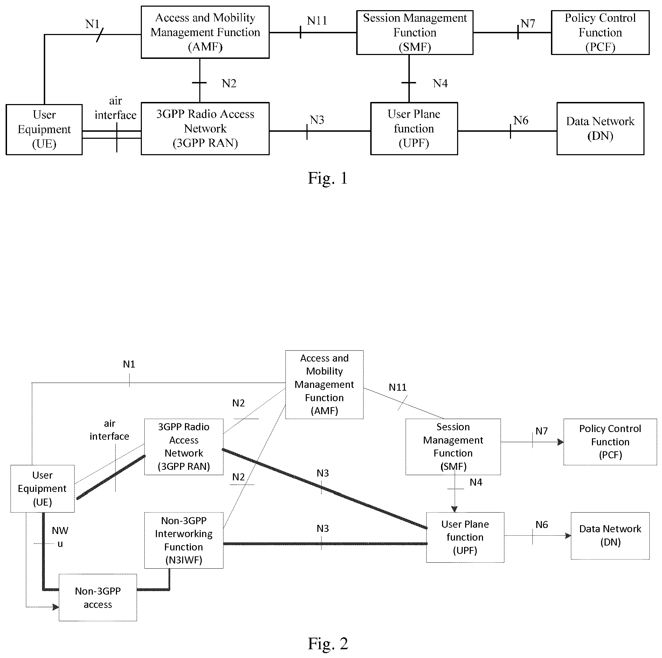

Fig. 1 is a schematic diagram of a next-generation mobile communication network architecture in the related art, and Fig. 2 is a schematic diagram of an architecture in the related art in which a 3GPP radio access network and a non-3GPP access network are connected to a same core network. In such architecture shown in Fig. 2, a terminal UE or the network may select a transfer path of the data stream according to a relevant policy or a condition of the network, that is, the data stream is transferred over the 3GPP access network or the non-3GPP access network.

As shown in Figs. 1 and 2, functions of network elements in the network architecture are described.

User Equipment (UE): accessing the network and obtaining services mainly through a wireless air interface. The terminal exchanges information with a base station through the air interface, and exchanges information with a common control plane function and a session control plane function of the core network through non-access stratum signaling.

3GPP Radio Access Network (3GPP RAN): responsible for air interface resource scheduling and air interface connection management of the terminal access network. The base station can be deployed to not support the network slice, or it can be deployed to support only certain types of network slices. If the base station only supports certain types of network slices, then all cells under a same tracking area (TA) must be ensured to support the same types of network slices.

Access and Mobility Management Function (AMF): belonging to the common control plane function in the core network, and being outside the network slice of the core network. A user has only one AMF, which is mainly responsible for authentication, authorization and contract inspection of a user to ensure that the user is an authorized user; user mobility management including location registration and temporary identification allocation; when the user initiates a Packet Data Unit (PDU) connection establishment request, selecting a suitable network slice instance and Session Management Function (SMF) instance; forwarding the Non-Access Stratum (NAS) signaling between the UE and the session control plane function; and forwarding the Access Stratum (AS) signaling between the base station and the session control plane function.

Session Management Function (SMF): being located within the network slice of the core network and interacting with the terminal. It is mainly responsible for the following functions: handling the request of establishment, modification and deletion of user PDU sessions, and selecting the User Plane function (UPF); establishing the PDU connection between the UE and the UPF; determining Quality of Service (QoS) parameters of the session together with the Policy Control Function (PCF); and the like.

User Plane Function (UPF): being located within the network slice of the core network and providing user plane processing functions, including data forwarding, QoS execution, and the like. The UPF also provides user plane anchors when users are moving, so as to ensure service continuity.

Non-3GPP interworking function (N3IWF): providing a uniform connection mode for the UE to access the core network from non-3GPP. The UE is connected to the control plane and the user plane of the core network through N2 and N3, respectively; meanwhile, the N3IWF provides a secure connection for the control plane and user plane data that the UE sends to the network through the non-3GPP access network.

In the related art, for the multi-access connection mode in which the UE is simultaneously connected to the 3GPP access network and the non-3GPP access network, a specific solution for implementing unified management of PDU sessions or service flows has not been provided yet.

### SUMMARY

The present application provides a method and a device for implementing the multi-access management, which can implement the unified management of PDU sessions or service flow in the case that the UE is under the multi-access connection mode.

The present application provides a method for implementing multi-access management, including: a core network recognizing that a user equipment (UE) has a multi-access capability; the UE being registered to the core network over a first access network, and the core network establishing a protocol data unit (PDU) connection over the first access network, wherein the PDU connection established over the first access network and a PDU connection that has been established by the UE over a second access network belong to a same PDU session; or the UE being registered to the core network over the second access network, and the core network establishing a PDU connection over the second access network, wherein the PDU connection established over the second access network and a PDU connection that has been established by the UE over the first access network belong to a same PDU session; or during a procedure that the UE requests to establish a PDU session over the first access network, the core network establishing a PDU connection of the PDU session over the second access network simultaneously; or during a procedure that the UE requests to establish a PDU session over the second access network, the core network establishing a PDU connection of the PDU session over the first access network simultaneously.

Optionally, the method further includes: the UE being registered to the core network over the second access network or the first access network, after the UE is registered to the first access network and the PDU session is established or after the UE is registered to the second access network and the PDU session is established; the step of the core network establishing a PDU connection of the PDU session over the second access network or the first access network includes: the core network establishing a PDU connection of the PDU session over the second access network or the first access network according to local policy or a routing rule, wherein the PDU connection established over the second access network or the first access network and a currently existing PDU connection established over the first access network or the second access network belong to a same PDU session.

Optionally, after the UE is registered to the first access network and the second access network, the method further includes: the UE initiating a PDU session over the first access network or the second access network; the step of the core network establishing a PDU connection of the PDU session over the second access network or the first access network simultaneously includes: the core network establishing a PDU connection over the second access network or the first access network simultaneously according to local policy or a routing rule, wherein the PDU connection established over the second access network or the first access network and the PDU connection initiated by the UE over the first access network or the second access network belong to a same PDU session.

Optionally, the step of the core network recognizing that the UE has the multi-access capability includes: the core network recognizing multi-access capability indication information indicating whether the UE has the multi-access capability through a registration procedure of the UE or a dedicated procedure.

Optionally, the step of establishing a PDU connection over the second access network or the first access network for the UE that is registered to the core network over the second access network or the first access network includes: an access and mobility management function (AMF) in the core network that manages an access and mobility status of the UE receiving a registration request from the UE over the second access network or the first access network, and notifying information that the UE is registered over the second access network or the first access network to a session management function (SMF) in the core network that manages the currently existing PDU session of the UE; and the SMF in the core network that manages the currently existing PDU session of the UE sending PDU session information to the UE through the second access network or the first access network according the local policy, and initiating a user plane tunnel establishment procedure between the second access network and a user plane function (UPF) or between the first access network and the UPF.

Optionally, the UE has a currently existing PDU session established over the second access network; the step of establishing a PDU connection over the first access network for the UE registered to the core network over the first access network includes: an AMF in the core network that manages an access and mobility status of the UE sending, when receiving information that the UE is registered over the first access network, the information that the UE is registered over the first access network to a SMF in the core network that manages the currently existing PDU session of the UE; the SMF in the core network receiving the information that the UE is registered over the first access network, and sending the information that the UE is registered over the first access network to a policy control function (PCF) in the core network, and the PCF in the core network determining routing rule information of the existing PDU session and providing it to the SMF; or the SMF in the core network receiving the information that the UE is registered over the first access network, and determining the routing rule information of the PDU session according to the local policy; and the SMF in the core network sending a PDU session message to the UE over the first access network, and initiating a user plane tunnel establishment procedure between the first access network and a UPF.

Optionally, the UE has a currently existing PDU session established over the first access network; the step of establishing a PDU connection over the second access network for the UE that is registered to the core network over the second access network includes: an AMF in the core network that manages an access and mobility status of the UE sending, when receiving information that the UE is registered over the second access network, the information that the UE is registered over the second access network to a SMF in the core network that manages the currently existing PDU session of the UE; the SMF in the core network receiving the information that the UE is registered over the second access network, and sending the information that the UE is registered over the second access network to a PCF in the core network, and the PCF in the core network determining routing rule information of the existing PDU session and providing it to the SMF; or the SMF in the core network receiving the information that the UE is registered over the second access network, and determining the routing rule information of the PDU session according to the local policy; and the SMF in the core network sending a PDU session message to the UE over the second access network, and initiating a user plane tunnel establishment procedure between the second access network and a UPF.

Optionally, the PDU session message includes: a PDU session identification of the currently existing PDU session of the UE, a PDU session IP address of the currently existing PDU session of the UE, data network information of the currently existing PDU session of the UE, the routing rule information or a quality of service (QoS) rule.

Optionally, the step of the core network establishing, for the UE, a PDU connection between a UPF and the same PDU session corresponding to the first access network and the second access network includes: a SMF in the core network initiating, when receiving a PDU session establishment request, a policy control procedure to a PCF in the core network, the PCF in the core network determining a routing rule of the PDU session and providing it to the SMF; or the SMF in the core network determining routing rule information of the PDU session according to a local configuration; and the SMF in the core network initiating a user plane tunnel establishment or update procedure between the second access network interworking function (N3IWF) and the UPF and/or between the first access network and the UPF.

Optionally, the method further includes: the SMF in the core network sending a PDU session message to the UE, the PDU session message including: a PDU session identification, a PDU session IP address, data network information of the PDU session, a routing rule or a QoS rule.

Optionally, after the UE is registered to the core network over the first access network and the second access network, the method further includes: if the core network triggers, over the second access network, the UE to initiate a service request over the first access network, the SMF in the core network sending a notification instruction to the UE over the second access network to notify the UE in a first access idle state to initiate the service request over the first access network.

The present application further provides a method for implementing multi-access management, including: a UE sending, to a core network, multi-access capability indication information that the UE itself has a multi-access capability; and the UE processing a PDU session according to signaling sent from the core network over a second access network or a first access network; wherein the signaling is used to instruct to create/update/delete a PDU connection connected over the first access network or the second access network; the PDU connections connected over the first access network and the second access network belong to a same PDU session.

The present application further provides a method for implementing multi-access management, including: in a case that a user equipment (UE) has been registered to a core network over a first access network and a second access network and the UE is in a first access network idle state, sending to the UE a notification instruction over the second access network to notify the UE in the first access network idle state to initiate a service request over the first access network.

The present application further provides a device for implementing multi-access management, including a recognizing module and a processing module, wherein the recognition module is configured to recognize that a UE has a multi-access capability; the processing module is configured to: in a case that the UE to be registered to a core network over a first access network or a second access network, enable the core network to establish a protocol data unit (PDU) connection over the first access network or the second access network, wherein the PUD connection established over the first access network or the second access network and a PDU connection that has been established by the UE over the second access network or the first access network belong to a same PDU session; or during a procedure that the UE requests to establish a protocol data unit (PDU) session over the first access network or the second access network, enable the core network to establish a PDU connection of the PDU session over the second access network or the first access network simultaneously.

Optionally, the processing module is configured to: enable the UE to be registered to the core network over the second access network or the first access network after the UE is registered to the first access network or the second access network and the PDU session is established; and establish a PDU connection over the second access network or the first access network according to local policy or a routing rule, wherein the PDU connection established over the second access network or the first access network and a currently existing PDU connection established over the first access network or the second access network belong to a same PDU session.

Optionally, the processing module is configured to: enable the UE to initiate a PDU session over the first access network or the second access network after the UE is registered to the first access network and the second access network; and establish simultaneously a PDU connection over the second access network or the first access network according to local policy or a routing rule, wherein the PDU connection established over the second access network or the first access network and the PDU connection initiated by the UE over the first access network or the second access network belong to a same PDU session.

Optionally, the recognizing module is configured to: recognize multi-access capability indication information indicating whether the UE itself has the multi-access capability through a registration procedure of the UE or a dedicated procedure.

Optionally, the processing module is configured to: receive a notification from an AMF for notifying of information that the UE is registered over the second access network or the first access network; send PDU session information to the UE over the second access network or the first access network according the local policy, and initiate a user plane tunnel establishment procedure between the second access network a UPF or between the first access network and the UPF; wherein the AMF is an AMF that manages a UE access and mobility status and receives a request of the UE for registration over the second access network or the first access network.

Optionally, in a case that the UE has a currently existing PDU session established over the second access network, the processing module is configured to: receive information from an AMF that the UE is registered over the first access network, wherein the AMF is an AMF that manages a UE access and mobility status and receives the information that the UE is registered over the first access network; send the information that the UE is registered over the first access network to a PCF, and receive routing rule information of the existing PDU session determined by the PCF; or receive the information that the UE is registered over the first access network, and enable a SMF to determine the routing rule information of the PDU session according to the local policy; and send to the UE a PDU session message over the first access network, and initiate a user plane tunnel establishment procedure between the first access network and a UPF.

Optionally, in a case that the UE has a currently existing PDU session established over the first access network, the processing module is configured to: receive information from an AMF that the UE is registered over the second access network, wherein the AMF is an AMF that manages a UE access and mobility status and receives the information that the UE is registered over the second access network; send the information that the UE is registered over the second access network to a PCF, and receive routing rule information of the existing PDU session determined by the PCF; or receive the information that the UE is registered over the second access network, and enable a SMF to determine the routing rule information of the PDU session according to the local policy; and send to the UE a PDU session message over the second access network, and initiate a user plane tunnel establishment procedure between the second access network and a UPF.

Optionally, the PDU session message includes: a PDU session identification of the currently existing PDU session, a PDU session IP address of the currently existing PDU session, data network information of the currently existing PDU session, the routing rule information or a QoS rule.

Optionally, in a case that the UE has been registered to the core network over the second access network and the first access network currently, the processing module is configured to: when receiving a PDU session establishment request, initiate a policy control procedure to a PCF and receive a routing rule of the PDU session determined by the PCF; or enable a SMF to determine routing rule information of the PDU session according to a local configuration; and initiate a user plane tunnel establishment or update procedure between the second access network interworking function (N3IWF) and the UPF and/or between the first access network and the UPF.

Optionally, the processing module is further configured to: send a PDU session message to the UE, wherein the PDU session message includes: a PDU session identification, a PDU session IP address, data network information of the PDU session, a routing rule or a QoS rule.

Optionally, after the UE is registered to the core network over the first access network and the second access network, if the UE is in a first access network idle state, and the core network triggers, over the second access network, the UE to initiate a service request over the first access network, the processing module is further configured to: send a notification instruction to the UE over the second access network to notify the UE in the first access idle state to initiate the service request over the first access network.

The present application further provides a device for implementing multi-access management, including a notification module and a forwarding module, wherein the notification module is configured to recognize, by a registration procedure of a UE, and notify a SMF whether the UE has a multi-access capability; the forwarding module is configured to manage a UE access and mobility status, and, when receiving a registration request from the UE over a second access network or a first access network, notify a SMF that manages a currently existing PDU session of the UE of information that the UE is registered over the second access network or the first access network.

Optionally, in a case that the UE has a currently existing PDU session established over the second access network, the forwarding module is configured to: when receiving information that the UE is registered over the first access network, send the information that the UE is registered over the first access network to the SMF that manages a currently existing PDU session.

Optionally, in a case that the UE has a currently existing PDU session established over the first access network, the forwarding module is configured to: when receiving information that the UE is registered over the second access network, send the information that the UE is registered over the second access network to the SMF that manages a currently existing PDU session.

Optionally, the notification module is further configured to: achieve that the UE is registered to a core network over the first access network and/or the second access network, and acquire, in the registration procedure or a dedicated procedure, multi-access capability indication information indicating that the UE itself has a multi-access capability.

The present application further provides a device for implementing multi-access management, including: a sending module and an execution module; wherein the sending module is configured to send, to a core network, multi-access capability indication information indicating that the device has a multi-access capability; the execution module is configured to process a PDU session according to signaling sent from the core network over a second access network or a first access network; wherein the signaling is used to instruct to create/update a PDU connection connected over the second access network or the first access network; the PDU connections over the first access network and the second access network belong to a same PDU session.

The technical solutions of the present application at least include the following: the core network recognizes that the UE has the multi-access capability; the UE is registered to the core network over the first access network or the second access network, and the core network establishes a protocol data unit (PDU) connection over the first access network or the second access network, the PDU connection established over the first access network or the second access network and a PDU connection that the UE has established over the second access network or the first access network belong to a same PDU session; or during a procedure that the UE requests to establish a protocol data unit (PDU) session over the first access network or the second access network, the core network simultaneously establishes a PDU connection of the PDU session over the second access network or the first access network. With the technical solutions provided by the present application, for the UE and the core network, the PDU session or the service flow management procedure performed between the UE and the core network can be implemented either over the 3GPP access network or the non-3GPP access network, so that a unified management of the PDU session or the service flow is achieved when the UE is simultaneously connected to the 3GPP access network and the non-3GPP access network. On one hand, through the unified management of the PDU session or the service flow, problems as follows can be avoided: separate management of different network elements causes a management conflict, which in turn causes a poor user experience, such as a poor communication quality generated by the confusion of the session or the service flow between the UE and the network side, conflicting communication charges, and so on. Thus, the communication quality and the user experience are improved. On the other hand, through the unified management of the PDU session or the service flow, it is also possible to solve the problem of low coordination efficiency caused by the separate management in which information needs to be scheduled from different databases or network elements when the information coordination is required.

### BRIEF DESCRIPTION OF THE FIGURES

The drawings described herein which constitute a part of the present invention are provided for further understanding the present invention. The exemplary embodiments of the present invention and the descriptions thereof are intended to explain the present invention and should not be considered as a limitation of the present invention. In the drawings:
Fig. 1 is a schematic diagram of a next-generation mobile communication network architecture in the related art;
Fig. 2 is a schematic diagram of an architecture in the related art in which a 3GPP radio access network and a non-3GPP access network are connected to the same core network;
Fig. 3 is a flowchart of a method for implementing multi-access management according to the present application;
Fig. 4 is a flowchart of establishing a connection between a UE and a 3GPP radio access network according to the present application;
Fig. 5 is a schematic flowchart of a first embodiment of implementing multi-access management according to the present application;
Fig. 6 is a schematic flowchart of a second embodiment of implementing multi-access management according to the present application;
Fig. 7 is a schematic flowchart of a third embodiment of implementing multi-access management according to the present application;
Fig. 8 is a schematic flowchart of a fourth embodiment of implementing multi-access management according to the present application;
Fig. 9 is a schematic structural diagram of a device for implementing multi-access management according to the present application;
Fig. 10 is a schematic structural diagram of another device for implementing multi-access management according to the present application; and
Fig. 11 is a schematic structural diagram of still another device for implementing multi-access management according to the present application.

### DETAILED DESCRIPTION

The embodiments of the present application will be described in detail bellow in conjunction with the drawings. It should be noted that the embodiments and the features in the embodiments of the present application may be combined arbitrarily as long as they do not conflict with each other.

In the technical solutions provided by the present application, when the UE is attached to a same core network over the 3GPP access network and the non-3GPP access network, the access management is performed by a same AMF on the UE connections over the two access networks. In this case, the AMF is responsible for forwarding the NAS signaling between the UE and the session control plane function. Therefore, for the UE and the core network, the management procedure for the PDU session or service flow between the UE and the core network may be achieved either over the 3GPP access network or the non-3GPP access network. In view of the above requirement, the present application implements the unified management of the PDU session or the service flow when the UE is connected to the 3GPP access network and the non-3GPP access network simultaneously.

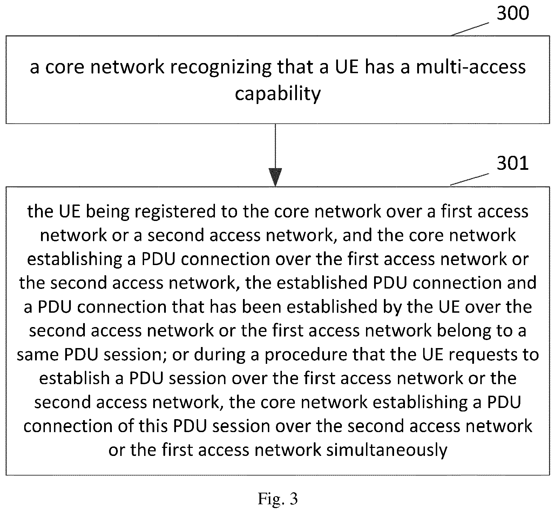

Fig. 3 is a flowchart of a method for implementing multi-access management according to the present application. As shown in Fig. 3, the method includes steps 300 and 301.

At step 300: a core network recognizing that a UE has a multi-access capability.

The multi-access capability is that the UE is capable of sending and receiving a user plane message belonging to a same PDU session over a first access network (such as a 3GPP access network) and a second access network (such as a non-3GPP access network). That is to say, as for a UE having a multi-access capability, the UE connections for the two types of access networks are managed by a same AMF when the UE is attached to a same core network over the 3GPP access network and/or the non-3GPP access network.

The core network may recognize whether the UE has a multi-access capability through a registration procedure of the UE. For example, during a procedure that the UE is registered to an AMF in the core network over a 3GPP access network and/or a non-3GPP access network, the UE sends, to the AMF in the core network, multi-access capability indication information indicating that the UE itself has the multi-access capability. Obviously, the UE may sends to the AMF in the core network multi-access capability indication information about whether the UE has the multi-access capability through a dedicated procedure. The way in which the core network recognizes that the UE has the multi-access capability as described herein is merely exemplary, and is not intended to limit the protection scope thereof.

At step 301: the UE being registered to the core network over the first access network or the second access network, and the core network establishing a protocol data unit (PDU) connection over the first access network or the second access network, the PDU connection established over the first access network or the second access network and a PDU connection that has been established by the UE over the second access network or the first access network belong to a same PDU session; or during a procedure that the UE requests to establish a protocol data unit (PDU) session over the first access network or the second access network, the core network establishing a PDU connection of the PDU session over the second access network or the first access network simultaneously.

Optionally, the first access network is the 3GPP radio access network, and the second access network is the non-3GPP access network.

That is to say, when the UE has a need to establish a packet data unit (PDU) session, PDU connection(s) of the 3GPP access network and/or non-3GPP access network for the same PDU session is/are established.

Optionally, the method may further include: the UE being registered to the core network over the non-3GPP access network or the 3GPP access network, after the UE is registered to the 3GPP access network or the non-3GPP access network and the PDU session is established. This step may include: the core network establishing a PDU connection over the second access network or the first access network according to local policy or a routing rule, wherein the PDU connection established over the second access network or the first access network and the currently existing connection established over the 3GPP access network or the non-3GPP access network belong to a same PDU session.

Optionally, this step may include: an AMF in the core network that manages an access and mobility status of the UE receiving a registration request from the UE over the non-3GPP access network or the 3GPP access network, and notifying a SMF that manages the currently existing PDU session of the UE of information that the UE is registered over the non-3GPP access network or the 3GPP access network; the SMF in the core network that manages the currently existing PDU session of the UE sending PDU session information to the UE over the non-3GPP access network or the 3GPP access network according the local policy, and initiating a user plane tunnel establishment procedure between the non-3GPP access network and a UPF or between the 3GPP access network and the UPF.

Optionally, in a case that the UE has a currently existing PDU session established over the non-3GPP access network, the step 301 may include: an AMF that manages an access and mobility status of the UE sending, when receiving information that the UE is registered over the 3GPP access network, the information that the UE is registered over the 3GPP access network to the SMF that manages the currently existing PDU session; the SMF receiving the information that the UE is registered over the 3GPP access network, and sending the information that the UE is registered over the 3GPP access network to the PCF, and the PCF determining routing rule information of the existing PDU session and providing it to the SMF; or the SMF receiving the information that the UE is registered over the 3GPP access network, and determining the routing rule information of the PDU session according to the local policy; the SMF sending a PDU session message to the UE over the 3GPP access network, wherein the PDU session message includes (but not limited to): a PDU session identification of the currently existing PDU session, a PDU session IP address of the currently existing PDU session, data network information of the currently existing PDU session, the routing rule information or a QoS rule; and the SMF initiating a user plane tunnel establishment procedure between the 3GPP access network and a UPF.

Optionally, in a case that the UE has a currently existing PDU session established over the 3GPP access network, the step 301 may include: an AMF that manages an access and mobility status sending, when receiving information that the UE is registered over the non-3GPP access network, the information that the UE is registered over the non-3GPP access network to the SMF that manages the currently existing PDU session; the SMF receiving the information that the UE is registered over the non-3GPP access network, and sending the information that the UE is registered over the non-3GPP access network to the PCF, and the PCF determining routing rule information of the existing PDU session and providing it to the SMF; or the SMF receiving the information that the UE is registered over the non-3GPP access network, and the SMF determining the routing rule information of the PDU session according to the local policy; the SMF sending a PDU session message to the UE over the non-3GPP access network, wherein the PDU session message includes (but not limited to): a PDU session identification of the currently existing PDU session, a PDU session IP address of the currently existing PDU session, data network information of the currently existing PDU session, the routing rule information or a QoS rule; and the SMF initiating a user plane tunnel establishment procedure between the non-3GPP access network and a UPF.

Optionally, the method further includes: the UE initiating a PDU session over the 3GPP access network or the non-3GPP access network after the UE is registered over the 3GPP access network and the non-3GPP access network. This step may include: the core network establishing simultaneously a PDU connection over the non-3GPP access network or the 3GPP access network according to the local policy or the routing rule, the PDU connection established over the non-3GPP access network or the 3GPP access network and the PDU connection initiated by the UE over the 3GPP access network or the non-3GPP access network belong to a same PDU session.

Optionally, if the UE has currently been registered to the core network over the non-3GPP access network and the 3GPP access network, then, the step of the core network establishing, for the UE, a PDU connection between the UPF and the same PDU corresponding to the 3GPP access network and the non-3GPP access network may include: the SMF initiating, when receiving a PDU session establishment request, a policy control procedure to the PCF, the PCF determining a routing rule of the PDU session and providing it to the SMF; or the SMF determining routing rule information of the PDU session according to a local configuration; the SMF initiating a user plane tunnel establishment or update procedure between the non-3GPP access network interworking function (N3IWF) and the UPF and/or between the 3GPP access network and the UPF.

Optionally, the SMF sends a PDU session message to the UE, and the PDU session message includes (but not limited to): a PDU session identification, a PDU session IP address, data network information of a PDU session, a routing rule or a QoS rule.

Optionally, the method of the present application further includes: the UE being registered to the AMF in the core network over the 3GPP access network and/or non-3GPP access network, and notifying, during the registration procedure, the AMF in the core network of multi-access capability indication information that the UE itself has the multi-access capability; or the UE being registered to the AMF in the core network over the 3GPP access network and/or non-3GPP access network, and notifying, through a dedicated procedure, the AMF in the core network of multi-access capability indication information that the UE itself has the multi-access capability.

Optionally, after the UE is registered to the core network over the 3GPP access network and the non-3GPP access network, the method of the present application further includes: if the core network triggers, over the non-3GPP access network, the UE to initiate a service request over the 3GPP access network, the SMF in the core network sending a notification instruction to the UE over the non-3GPP access network to notify the UE in a 3GPP access idle state to initiate the service request over the 3GPP access network.

The present application further provides a method for implementing multi-access management which includes: the UE sending, to a core network, multi-access capability indication information that the UE itself has a multi-access capability; and processing a PDU session according to signaling sent from the core network over the non-3GPP access network or the 3GPP access network, wherein the signaling is used to instruct to create/update/delete a PDU connection connected over the non-3GPP access network or the 3GPP access network, and the PDU connections over the first access network and the second access network belong to a same PDU session.

The capability indication information is used to indicate that the UE is capable of sending and receiving a user plane message belonging to a same PDU session over the 3GPP access network and the non-3GPP access network. That is to say, as for a UE having a multi-access capability, the UE connections for the two types of access networks are managed by a same AMF when the UE is attached to a same core network over the 3GPP access network and/or the non-3GPP access network.

Optionally, during the procedure that the UE is registered to the AMF in the core network over the 3GPP access network and/or the non-3GPP access network, the UE sends to the AMF in the core network the multi-access capability indication information that the UE itself has the multi-access capability. Obviously, the UE may sends, through a dedicated procedure, to the AMF in the core network the multi-access capability indication information about whether the UE has the multi-access capability. The way in which the core network recognizes that the UE has the multi-access capability as described herein is merely exemplary, and is not intended to limit the protection scope thereof.

With any of the above methods for implementing multi-access management provided by the present application, as for the UE and the core network, a PDU session or a service flow management procedure between the UE and the core network may be achieved either over the 3GPP access network or the non-3GPP access network, thereby achieving the unified management of the PDU session or service flow when the UE is connected to the 3GPP access network and the non-3GPP access network simultaneously.

The specific implementations of the method for implementing multi-access management in the present application are described in detail below in conjunction with the embodiments.

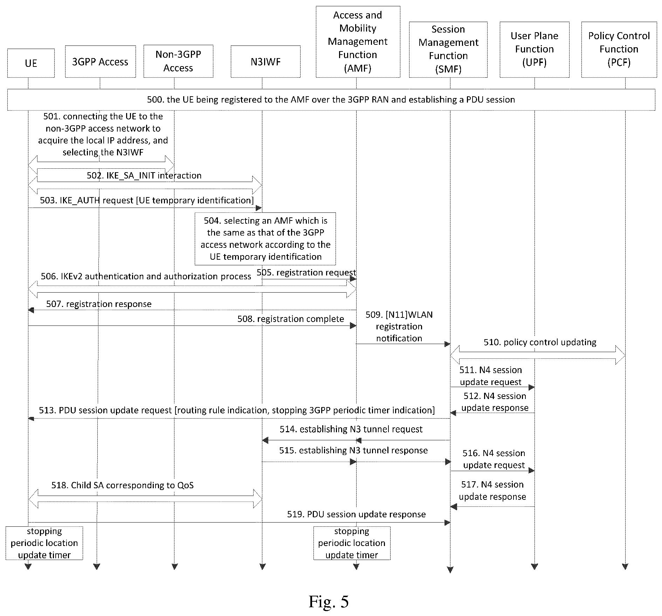

Fig. 5 is a schematic flowchart of a first embodiment of implementing multi-access management according to the present application. The first embodiment describes the following: first, the UE is attached to the 3GPP access network and establishes a PDU session; thereafter, during a procedure that the UE is registered to the core network over the non-3GPP access network (the WLAN access network is taken as an example in the first embodiment), the WLAN registration is associated to the PDU session that is established over the 3GPP access network previously, and the session management under the multi-access scenario is achieved according to a related policy.

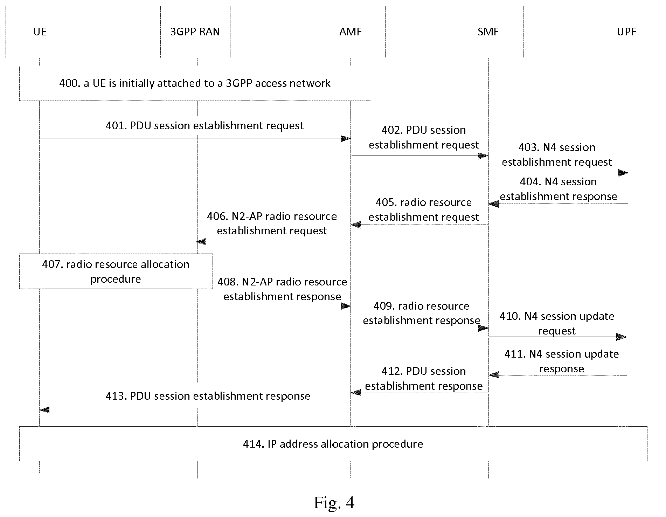

Fig. 4 is a flowchart of establishing a connection between a UE and a 3GPP radio access network according to the present application. As shown in Fig. 4, the flowchart includes steps 400 to 414.

At step 400, a UE being registered to an AMF over a 3GPP access network.

At step 401, the UE sending to the AMF a PDU session establishment request.

At step 402, the AMF sending the PDU session establishment request to a SMF.

At step 403, the SMF sending to a UPF an N4 session establishment request.

At step 404, the UPF sending to the SMF an N4 session establishment response.

At step 405, the SMF sending to the AMF a radio resource establishment request.

At step 406, the AMF sending to the 3GPP RAN an N2-AP radio resource establishment request.

At step 407, radio resource allocation procedure.

At step 408, the 3GPP RAN sending to the AMF an N2-AP radio resource establishment response.

At step 409, the AMF sending to the SMF a radio resource establishment response.

At step 410, the SMF sending to the UPF an N4 session update request.

At step 411, the UPF sending to the SMF an N4 session update response.

At step 412, the SMF sending to the AMF a PDU session establishment response.

At step 413, the AMF sending to the UE the PDU session establishment response.

At step 414, IP address allocation procedure.

As shown in Fig. 5, the flowchart includes steps 500 to 519.

At step 500, the UE being registered to the AMF over the 3GPP access network, and establishing a PDU session.

A specific implementation of this step may refer to the flowchart shown in Fig. 5, and may include: the UE sending capability indication information to the AMF through registration information being carried in an IKEv2 message and forwarded to the AMF by the N3IWF.

This step focuses on that, in the procedure shown in this step, the UE notifies the AMF of the multi-access capability indication information that the UE has the multi-access capability. The multi-access capability indication information is used to indicate that the UE is capable of sending and receiving a user plane message over the 3GPP access network and the non-3GPP access network simultaneously.

At step 501: the UE detecting WLAN access information, connecting to a WLAN local network and acquiring a local IP address of the WLAN access network, and querying an N3IWF IP address through a domain name system (DNS).

At step 502 to step 504, the UE initiating an IKE_SA_INIT interaction to the N3IWF, the UE sending an IKE_AUTH request message including a UE identification to an N3IWF corresponding to the queried N3IWF IP address, wherein the UE identification includes a user identification of the UE or a temporary user identification allocated by the network and acquired in step 500; the N3IWF acquiring AMF address information according to the user identification of the UE or the temporary user identification, i.e., the N3IWF selecting the same AMF as the 3GPP access network in step 500.

At step 505, the N3IWF sending to the selected AMF a registration request that the UE is to be attached over the WLAN.

At step 506: performing an IKEv2 authentication and authorization procedure between the UE and the N3IWF.

At step 507 to step 508, the SMF sending to the UE a registration response message by the AMF, and the UE replying to the SMF with a registration completion message by the AMF.

At step 509, the AMF sending to the SMF a notification message indicating registration information that the UE is to access over the non-3GPP or the WLAN, according to the UE multi-access capability received in step 500 or UE signing information or an operator policy.

At step 510, the SMF sending to the PCF a policy control update request including the registration information that the UE is to access over the WLAN, the PCF determining an association relationship between the current PDU session and the WLAN, and sending, to the SMF, routing rule information or QoS information of the determined UE PDU session through a policy control update response message; wherein the routing rule information indicates the routing of the IP flow, that is, it indicates whether the IP flow is routed over the WLAN access network or the 3GPP access network.

At step 511 to step 512, the SMF sending to a UPF corresponding to the current PDU session a N4 session update request message in which routing rule information, QoS information and so on are carried, the UPF updating a context related to the N4 session, saving the received routing rule information or QoS information; the UPF allocating an uplink tunnel identification of an N3 tunnel (between the N3IWF and the UPF) corresponding to the PDU session, and providing to the SMF an N4 session update response in which the uplink tunnel identification of the N3 tunnel allocated by the UPF is carried.

It should be noted that, if the uplink tunnel identification of the N3 interface of the UPF is common to the N3IWF and the 3GPP RAN, or the uplink tunnel identification and a downlink tunnel identification of the N3 interface of the UPF are allocated by the SMF, this step may be omitted.

At step 513, the SMF sending to the UE a PDU session update request by the AMF, wherein the PUD session update request carries therein PDU session parameters, such as a session identification, an IP address, a data network name and the like, as well as the routing rule information or the QoS information.

At step 514, the SMF sending to the AMF/N3IWF an N3 tunnel establishment request message in which the PDU session parameters, such as the session identification, the IP address, the data network name and the like, as well as the routing rule information, the QoS information, or the uplink tunnel identification of the N3 tunnel, are carried.

At step 515, the N3IWF providing to the AMF/SMF an N3 tunnel establishment response message in which the downlink tunnel identification of the N3 tunnel is carried.

At step 516 to step 517, the SMF sending to the UPF an N4 session update request carrying an N3 tunnel downlink tunnel identification; if step 511 to step 512 are not performed, the N4 session update request also carries the routing rule information, the QoS information, and so on; the UPF updating a context related to the N4 session, saving the received routing rule information and QoS information, and providing to the SMF an N4 session update response.

At step 518, the SMF initiating, to the UE, an establishment of corresponding Child Security Association (Child SA) according to the QoS information received in step 516, so as to protect a message transmission corresponding to the QoS information.

At step 519, the UE sending the PDU a session response, the UE confirming the routing rule information of the current PDU session, the UE performing the routing of the IP flow according to the routing rule, and at the same time the UE stopping a periodic location update timer; the AMF receiving the PDU session update response to stop the periodic location update timer.

At this point, after being registered to the core network over the non-3GPP access network (the WLAN access network is taken as an example in the first embodiment), the UE associates the WLAN registration to the PDU session that is established by the UE over the 3GPP access network previously, and achieves the session management under the multi-access scenario according to a related policy.

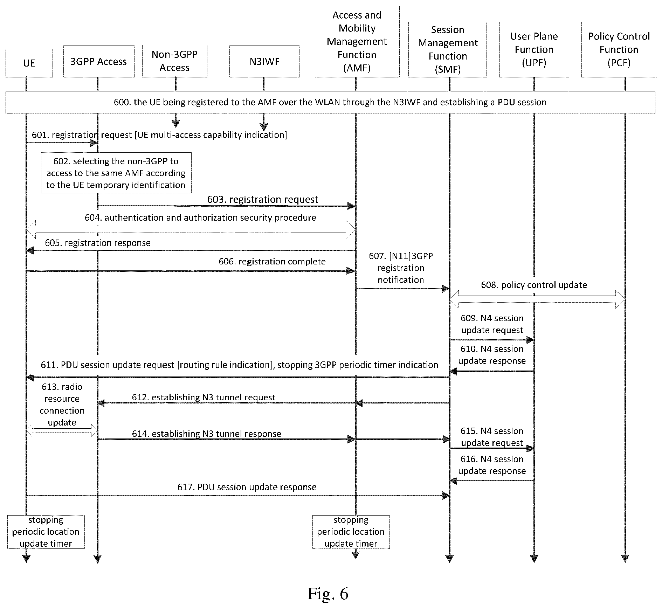

Fig. 6 is a schematic flowchart of a second embodiment of implementing multi-access management according to the present application. The second embodiment describes the following: first, the UE is attached to the core network over the non-3GPP access (in this embodiment, the WLAN access network is taken as an example) and establishes a PDU session; then, during a procedure that the UE is registered to the core network over the 3GPP RAN, the 3GPP RAN registration is associated to the PDU session that is established by the UE over the WLAN access previously, and the session management under the multi-access scenario is achieved according to a related policy. As shown in Fig. 6, the flowchart includes steps 600 to 617.

At step 600, the UE being registered to the AMF over the WLAN through the N3IWF, and establishing a PDU session. During the registration procedure in this step, the UE notifies the AMF of a multi-access capability.

At step 601 to step 603, the UE detecting a 3GPP RAN covering signal, and sending to a 3GPP RAN base station a registration request carrying a user identification of the UE or a temporary user identification allocated by the network and acquired in step 600 and UE multi-access capability indication information indicating that the UE is capable of sending and receiving user plane messages belonging to a same PDU session over the 3GPP RAN and non-3GPP access network; the 3GPP RAN acquiring AMF address information, i.e., the AMF address information registered over the WLAN in step 600, according to the identification of the UE or the temporary user identification, and the 3GPP RAN forwarding to the AMF a registration request message.

At step 604, performing a verification procedure between the UE and the AMF for authenticating and authorizing user signing information.

At step 605 to step 606, the SMF sending a registration response message to the UE by the AMF, and the UE replying to the SMF with a registration completion message by the AMF.

At step 607, the AMF notifying the SMF of information that the UE is registered over the 3GPP access, according to the UE multi-access capability indication information or the UE signing information received in step 605 to step 606 or an operation policy.

At step 608, the SMF sending to the PCF a policy control update request carrying the registration information that the UE is accessed over the 3GPP, the PCF determining an association relationship between the current PDU session and the 3GPP, and sending to the SMF the determined routing rule information or QoS information of the PDU session of the UE through a policy control update response message; wherein, the routing rule information indicates the routing of IP flow, i.e., whether the IP flow is routed over the WLAN access network or the 3GPP access network.

At step 609 to step 610, the SMF sending to a UPF corresponding to the current PDU session a N4 session update request message in which routing rule information, QoS information and so on are carried, the UPF updating a context related to the N4 session, saving the received routing rule information or QoS information; the UPF allocating an uplink tunnel identification of an N3 tunnel (between the N3IWF and the UPF) corresponding to the PDU session, and providing to the SMF an N4 session update response in which the uplink tunnel identification of the N3 tunnel allocated by the UPF is carried.

It should be noted that, if the uplink tunnel identification of the N3 interface of the UPF is common to the N3IWF and the 3GPP RAN, or the uplink tunnel identification and a downlink tunnel identification of the N3 interface of the UPF are allocated by the SMF, this step may be omitted.

At step 611, the SMF sending to the UE a PDU session update request by the AMF, the PUD session update request carrying therein PDU session parameters, such as a session identification, an IP address, a data network name and the like, as well as the routing rule information or the QoS information.

At step 612 to step 614, the SMF sending to the AMF/3GPP RAN an N3 tunnel establishment request message in which the PDU session parameters, such as the session identification, the IP address, the data network name and the like, as well as the routing rule information, the QoS information, or the uplink tunnel identification of the N3 tunnel, are carried; performing a corresponding radio connection resource update between the 3GPP RAN and the UE, and the 3GPP RAN providing to the AMF/SMF an N3 tunnel establishment response message in which a downlink tunnel identification of the N3 tunnel is carried.

At step 615 to step 616, the UPF sending an N4 session update request in which a downlink tunnel identification of the N3 tunnel is carried; if step 609 to step 610 are not performed, the N4 session update request also carries therein the routing rule information, the QoS information, and so on; the UPF updating a context related to the N4 session, saving the received routing rule information and QoS information, and providing to the SMF an N4 session update response.

At step 617, the UE sending to the SMF a PDU session update response, the UE confirming the routing rule information of the current PDU session, the UE subsequently performing the routing of the IP flow according to the routing rule, and at the same time the UE stopping a periodic location update timer; the AMF receiving the PDU session update response to stop the periodic location update timer.

At this point, after the UE is attached to the core network over the non-3GPP access (the WLAN access network is taken as an example in this embodiment) and establishes the PDU session, during the procedure that the UE is registered to the core network over the 3GPP RAN, it is achieved to associate the 3GPP RAN registration to the PDU session that is established by the UE over the WLAN previously, and the session management under the multi-access scenario is also achieved according to a related policy.

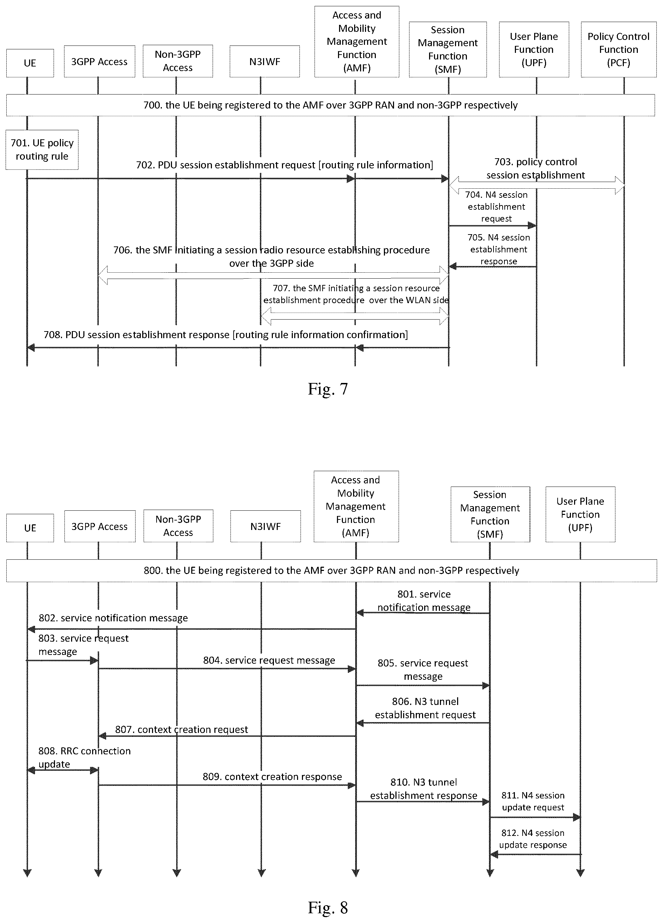

Fig. 7 is a schematic flowchart of a third embodiment of implementing multi-access management according to the present application. The third embodiment describes a procedure that: the UE is registered to and is connected to the core network over the non-3GPP access and the 3GPP RAN, respectively, the UE initiates a PDU session request (in which the routing rule indication information is carried) over the non-3GPP side or the 3GPP side, the core network determines the PDU session routing rule for the UE according to the PDU session request, and establishes the PDU connections for the 3GPP and the non-3GPP. As shown in Fig. 7, the flowchart includes steps 700 to 708.

At step 700, the UE being registered to the AMF from the WLAN access network and the 3GPP access network, respectively, and establishing a PDU session; during the registration of this step, the UE notifying multi-access capability information to the AMF.

At step 701 to step 702, the UE selecting, according to the routing rule information or the network state such as the air interface congestion, the 3GPP access network or the non-3GPP access network to send a PDU session establishment request message through the AMF to the SMF, the PDU session establishment request message carrying therein the routing rule information of requesting for the PDU session.

At step 703, the SMF sending the requested routing rule to the PCF, the PCF performing a routing rule decision, and sending the determined routing rule information to the SMF by a response message.

At step 704 to step 705, the SMF sending to the UPF corresponding to the PDU session an N4 session establishment request message in which PDU session parameters, such as a session identification, an IP address, a data network name and the like, as well as the routing rule information, N3 tunnel identification information, the QoS information and the like, are carried; the UPF generating a context related to the N4 session , saving the received routing rule information and QoS information, and the UPF providing to the SMF an N4 session establishment response message.

At step 706, the SMF initiating a radio resource establishment procedure over the 3GPP side.

At step 707, the SMF initiating a session resource establishment procedure over the non-3GPP side.

At step 708, the SMF sending to the UE, through the AMF, a PDU session establishment response message in which the PDU session parameters, such as the session identification, the IP address, the data network name, as well as the routing rule are carried, and the UE subsequently performing the routing of the IP flow according to the routing rule.

At this point, the procedure is achieved that the UE is registered to and is connected to the core network over the non-3GPP access and the 3GPP RAN, respectively, the UE initiates a PDU session request (in which the routing rule indication information is carried) over the non-3GPP side or the 3GPP side, the core network determines the PDU session routing rule for the UE according to the PDU session request, and establishes the PDU connections for the 3GPP and the non-3GPP.

The present application further provides another method for implementing multi-access management including: in a case that a user equipment (UE) has been registered to a core network over a first access network and a second access network and the UE is in a first access network idle state, the core network may send to the UE a notification instruction over the second access network to notify the UE in the first access network idle state to initiate a service request over the first access network. Fig. 8 is a schematic flowchart of a fourth embodiment of implementing multi-access management according to the present application. The fourth embodiment describes a procedure that: the UE is registered to and is connected to the core network over the non-3GPP access and the 3GPP RAN, and the network triggers, over the non-3GPP access, the UE to initiate a service request over the 3GPP. During this procedure, the UE notifies the AMF the multi-access information. As shown in Fig. 8, the flowchart includes steps 800 to 812.

At step 800, the UE being registered to the AMF over the WLAN access network and the 3GPP access network, respectively, and establishing a PDU session; it is assumed that, at a certain moment, the UE enters the idle state over the 3GPP access network side.

At step 801, assuming that there is a downlink data trigger to the UE, the UE needs to re-enter the 3GPP connection state to perform related services. Then, the SMF is assumed to send a message to the UE over the non-3GPP side to notify the UE, the message is forwarded to the N3IWF via the AMF, and is sent by the N3IWF to the UE over the WLAN access side.

At step 802 to step 812, the UE sending a service request message to the AMF over the 3GPP RAN, and the AMF restoring a UE-related connection context so that the connection re-establishing procedure is completed. The specific implementation is as shown in Fig. 8, and is easily understood by those skilled in the art based on the technical solutions provided by the present application, and details are not described herein again.

The present application further provides a computer storage medium storing therein computer-executable instructions for performing any of the methods for implementing multi-access management according to the present application.

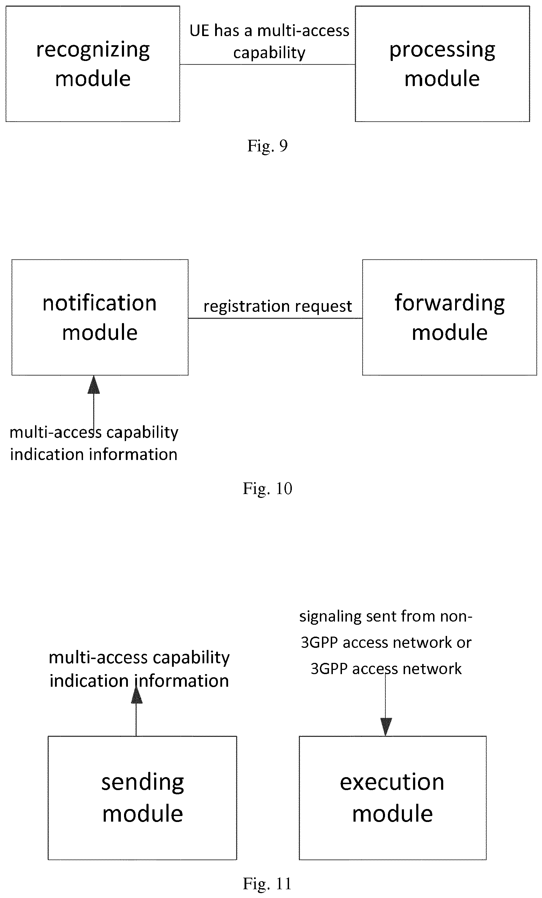

Fig. 9 is a schematic structural diagram of a device for implementing multi-access management according to the present application. As shown in Fig. 9, the device includes at least a recognizing module and a processing module.

The recognition module is configured to recognize that a UE has a multi-access capability, wherein the multi-access capability is that the UE is capable of sending and receiving a user plane message belonging to a same PDU session over a 3GPP access network and a non-3GPP access network.

The processing module is configured to: when the UE to be registered to a core network over a first access network or a second access network, enable the core network to establish a protocol data unit (PDU) connection over the first access network or the second access network, wherein the PUD connection established over the first access network or the second access network and a PDU connection that has been established by the UE over the second access network or the first access network belong to a same PDU session; or during a procedure that the UE requests to establish a protocol data unit (PDU) session over the first access network or the second access network, enable the core network to establish a PDU connection of the PDU session over the second access network or the first access network simultaneously. That is to say, when the UE has a need to establish a packet data unit (PDU) session, a PDU connection of the 3GPP access network and/or the non-3GPP access network is established for the same PDU session.

Optionally, the recognizing module is configured to: recognize multi-access capability indication information indicating whether the UE itself has the multi-access capability through a registration procedure of the UE, for example, during a procedure that the UE is registered to an AMF in the core network over the 3GPP access network and/or the non-3GPP access network, the UE sends to the AMF in the core network the multi-access capability indication information that the UE has the multi-access capability; or recognize, by the AMF in the core network, the multi-access capability indication information indicating whether the UE itself has the multi-access capability through a dedicated procedure.

Optionally, the processing module may be configured to: enable the UE to be registered to the core network over the non-3GPP access network or the 3GPP access network after the UE is registered to the 3GPP access network or the non-3GPP access network and a PDU session is established; establish a PDU connection over the non-3GPP access network or the 3GPP access network according to local policy or a routing rule, wherein the PDU connection established over the non-3GPP access network or the 3GPP access network and the currently existing PDU connection established over the 3GPP access network or the non-3GPP access network belong to a same PDU session.

Optionally, the processing module is configured to: receive a notification from an AMF for notifying of information that the UE is registered over the non-3GPP access network or the 3GPP access network, wherein the AMF is an AMF that manages an access and mobility status and receives a registration request from the UE over the non-3GPP access network or the 3GPP access network; send PDU session information to the UE over the non-3GPP access network or the 3GPP access network according the local policy, and initiate a user plane tunnel establishment procedure between the non-3GPP access network and a UPF or between the 3GPP access network and the UPF.

Optionally, in a case that the UE has a currently existing PDU session established over the non-3GPP access network, the processing module is configured to: receive information from an AMF that the UE is registered over the 3GPP access network, wherein the AMF is an AMF that manages an access and mobility status and receives the information that the UE is registered over the 3GPP access network; send the information that the UE is registered over the 3GPP access network to a PCF, and receive routing rule information of the existing PDU session that is determined by the PCF; or receive the information that the UE is registered over the 3GPP access network, and enable the SMF to determine the routing rule information of the PDU session according to the local policy; send to the UE a PDU session message over the 3GPP access network, wherein the PDU session message includes (but not limited to): a PDU session identification of the currently existing PDU session, a PDU session IP address of the currently existing PDU session, data network information of the currently existing PDU session, the routing rule information or a QoS rule; and initiate a user plane tunnel establishment procedure between the 3GPP access network and a UPF.

In a case that the UE has a currently existing PDU session established over the 3GPP access network, the processing module is specifically configured to: receive information from an AMF that the UE is registered over the non-3GPP access network, wherein the AMF is an AMF that manages an access and mobility status and receives the information that the UE is registered over the non-3GPP access network; send the information that the UE is registered over the non-3GPP access network to a PCF, and receive routing rule information of the existing PDU session that is determined by the PCF; or receive the information that the UE is registered over the non-3GPP access network, and enable the SMF to determine the routing rule information of the PDU session according to the local policy; send to the UE a PDU session message over the non-3GPP access network, wherein the PDU session message includes (but not limited to): a PDU session identification of the currently existing PDU session, a PDU session IP address of the currently existing PDU session, data network information of the currently existing PDU session, the routing rule information or a QoS rule; and initiate a user plane tunnel establishment procedure between the non-3GPP access network and a UPF.

Optionally, the processing module may be configured to: initiate a PDU session over the 3GPP access network or the non-3GPP access network after the UE has been registered to the 3GPP access network and the non-3GPP access network; and establish, for the UE, a PDU connection with the UPF for the same PDU session corresponding to the 3GPP access network and the non-3GPP access network.

In a case that the UE has been registered to the core network over the 3GPP access network and the non-3GPP access network currently, the operation of establishing for the UE a PDU connection with the UPF for the same PDU session corresponding to the 3GPP access network and the non-3GPP access network in the processing module, may include: when receiving a PDU session establishment request, initiating a policy control procedure to a PCF; receiving a routing rule of the PDU session determined by the PCF; or the SMF determining routing rule information of the PDU session according to a local configuration; initiating a user plane tunnel establishment or update procedure between a non-3GPP access network interworking function (N3IWF) and the UPF and/or between the 3GPP access network and the UPF.

Optionally, the processing module is further configured to: send a PDU session message to the UE, the PDU session message includes (but not limited to): a PDU session identification, a PDU session IP address, data network information of a PDU session, a routing rule or a QoS rule.

After the UE is registered to the core network over the 3GPP access network and the non-3GPP access network, if the UE is triggered, over the non-3GPP access network, to initiate a service request over the 3GPP access network, then the processing module is further configured to: send a notification instruction to the UE over the non-3GPP access network to notify the UE in the 3GPP access idle state to initiate the service request over the 3GPP access network.

The device shown in Fig. 9 may be provided in the SMF, or may be provided as a separate apparatus.

Fig. 10 is a schematic structural diagram of another device for implementing multi-access management according to the present application. As shown in Fig. 10, the device includes at least a notification module and a forwarding module.

The notification module is configured to recognize, through a registration procedure of a UE, whether the UE has a multi-access capability, and notify a SMF of the same, wherein the multi-access capability is that the UE is capable of sending and receiving a user plane message belonging to a same PDU session over a 3GPP access network and a non-3GPP access network.

The forwarding module is configured to manage an access and mobility status, and, when receiving a registration request from the UE over a non-3GPP access network or a 3GPP access network, notify a SMF that manages a currently existing PDU session of information that the UE is registered over the non-3GPP access network or the 3GPP access network.

Optionally, in a case that the UE has a currently existing PDU session established over the non-3GPP access network, the forwarding module is configured to: when receiving information that the UE is registered over the 3GPP access network, send the information that the UE is registered over the 3GPP access network to the SMF that manages the currently existing PDU session.

In a case that the UE has a currently existing PDU session established over the 3GPP access network, the forwarding module is specifically configured to: when receiving information that the UE is registered over the non-3GPP access network, send the information that the UE is registered over the non-3GPP access network to the SMF that manages the currently existing PDU session.

Optionally, the notification module is further configured to: achieve that the UE is registered to the core network over the 3GPP access network and/or the non-3GPP access network, and acquire, during the registration procedure or a dedicated procedure, multi-access capability indication information indicating that the UE itself has a multi-access capability.

The device shown in Fig. 10 may be provided in the AMF, or may be provided as a separate apparatus.

Fig. 11 is a schematic structural diagram of still another device for implementing multi-access management according to the present application. As shown in Fig. 11, the device includes at least a sending module and an execution module.

The sending module is configured to send, to a core network, multi-access capability indication information indicating that the device has a multi-access capability.

The execution module is configured to process a PDU session according to signaling sent from the core network over a non-3GPP access network or a 3GPP access network.

The signaling is used to instruct to create/update a PDU connection connected over the non-3GPP access network or the 3GPP access network, and the PDU connections over the 3GPP access network and the non-3GPP access network belong to a same PDU session.

The capability indication information is used to indicate that the UE is capable of sending and receiving a user plane message belonging to a same PDU session over a 3GPP access network and a non-3GPP access network. That is to say, as for the UE having the multi-access capability, the UE connections for the two types of access networks are managed by a same AMF when the UE is attached to a same core network over the 3GPP access network and/or the non-3GPP access network.

Optionally, the sending module is configured to: send, to an AMF in the core network, the multi-access capability indication information that a UE to which the device belongs has the multi-access capability, during a procedure of registration to the AMF in the core network over the 3GPP access network and/or the non-3GPP access network; or send, to the AMF in the core network, the multi-access capability indication information about whether the UE has the multi-access capability through a dedicated procedure.

The device shown in Fig. 11 may be provided in the UE, or may be provided as a separate apparatus.

An embodiment of the present application further provides a communication apparatus which may be the above UE or a network element on the network side. The network element on the network side may include a network element of an access network and/or a network element of the core network. The network element of the access network may include a base station, and the network element of the core network may include an AMF or a SMF, etc.

The communication apparatus may include a transceiver, a memory, and a processor coupled to the transceiver and the memory. The transceiver may be used for information interaction between the communication apparatus and other apparatuses, the memory may be used to store information, for example, computer-executable codes; the processor can implement one or more of the foregoing methods for implementing multi-access management by executing the executable codes, for example, performing one or more of the methods shown in Figs. 3 to 8.

The present application also provides a computer storage medium storing a computer program, which, after being executed, can implement one or more of the foregoing methods for implementing multi-access management, for example, performing one or more of the methods shown in Figs. 3 to 8.

The computer storage medium may be a non-transitory storage medium, optionally, a random storage medium, a read-only storage medium, a flash memory, a mobile hard disk, or an optical disk, or the like.

The above descriptions are merely preferred examples of the present application and are not intended to limit the scope of the present application. Any modifications, equivalent substitutions, improvements, etc. made within the spirit and principles of the present application are intended to be included within the scope of the present application.

### Industrial Applicability

According to the technical solutions provided by the embodiments of the present invention, the PDU session or the service flow management procedure between the UE and the core network can be implemented either over the 3GPP access network or the non-3GPP access network, so that the unified management of the PDU session or the service flow is achieved when the UE is connected to the 3GPP access network and the non-3GPP access network at the same time. This can provide better communication quality and user experience, and has a positive industrial effect. Meanwhile, the technical solutions provided by the present application have the characteristics of being simple and convenient, and has the prospect of being widely applied in the industry.

## Claims

1. A method for implementing multi-access management, comprising:
a core network recognizing that a user equipment (UE) has a multi-access capability;
the UE being registered to the core network over a first access network, and the core network establishing a protocol data unit (PDU) connection over the first access network, wherein the PDU connection established over the first access network and a PDU connection that has been established by the UE over a second access network belong to a same PDU session; or
the UE being registered to the core network over the second access network, and the core network establishing a PDU connection over the second access network, wherein the PDU connection established over the second access network and a PDU connection that has been established by the UE over the first access network belong to a same PDU session; or
during a procedure that the UE requests to establish a PDU session over the first access network, the core network establishing a PDU connection of the PDU session over the second access network simultaneously; or
during a procedure that the UE requests to establish a PDU session over the second access network, the core network establishing a PDU connection of the PDU session over the first access network simultaneously.

2. The method of claim 1, wherein the method further comprises:
the UE being registered to the core network over the second access network or the first access network, after the UE is registered to the first access network and the PDU session is established or after the UE is registered to the second access network and the PDU session is established;
the step of the core network establishing a PDU connection of the PDU session over the second access network or the first access network comprises:
the core network establishing a PDU connection of the PDU session over the second access network or the first access network according to local policy or a routing rule, wherein the PDU connection established over the second access network or the first access network and a currently existing PDU connection established over the first access network or the second access network belong to a same PDU session.

3. The method of claim 1, wherein after the UE is registered to the first access network and the second access network, the method further comprises:
the UE initiating a PDU session over the first access network or the second access network;
the step of the core network establishing a PDU connection of the PDU session over the second access network or the first access network simultaneously comprises:
the core network establishing a PDU connection over the second access network or the first access network simultaneously according to local policy or a routing rule, wherein the PDU connection established over the second access network or the first access network and the PDU connection initiated by the UE over the first access network or the second access network belong to a same PDU session.

4. The method of any of claims 1, 2 or 3, wherein the step of the core network recognizing that the UE has the multi-access capability comprises:
the core network recognizing multi-access capability indication information indicating whether the UE has the multi-access capability through a registration procedure of the UE or a dedicated procedure.

5. The method of claim 2, wherein the step of establishing a PDU connection over the second access network or the first access network for the UE that is registered to the core network over the second access network or the first access network comprises:
an access and mobility management function (AMF) in the core network that manages an access and mobility status of the UE receiving a registration request from the UE over the second access network or the first access network, and notifying information that the UE is registered over the second access network or the first access network to a session management function (SMF) in the core network that manages the currently existing PDU session of the UE; and
the SMF in the core network that manages the currently existing PDU session of the UE sending PDU session information to the UE over the second access network or the first access network according the local policy, and initiating a user plane tunnel establishment procedure between the second access network and a user plane function (UPF) or between the first access network and the UPF.

6. The method of claim 2, wherein the UE has a currently existing PDU session established over the second access network; the step of establishing a PDU connection over the first access network for the UE registered to the core network over the first access network comprises:
an AMF in the core network that manages an access and mobility status of the UE sending, when receiving information that the UE is registered over the first access network, the information that the UE is registered over the first access network to a SMF in the core network that manages the currently existing PDU session of the UE;
the SMF in the core network receiving the information that the UE is registered over the first access network, and sending the information that the UE is registered over the first access network to a policy control function (PCF) in the core network, and the PCF in the core network determining routing rule information of the existing PDU session and providing it to the SMF; or the SMF in the core network receiving the information that the UE is registered over the first access network, and determining the routing rule information of the PDU session according to the local policy; and
the SMF in the core network sending a PDU session message to the UE over the first access network, and initiating a user plane tunnel establishment procedure between the first access network and a UPF.

7. The method of claim 2, wherein the UE has a currently existing PDU session established over the first access network; the step of establishing a PDU connection over the second access network for the UE that is registered to the core network over the second access network comprises:
an AMF in the core network that manages an access and mobility status of the UE sending, when receiving information that the UE is registered over the second access network, the information that the UE is registered over the second access network to a SMF in the core network that manages the currently existing PDU session of the UE;
the SMF in the core network receiving the information that the UE is registered over the second access network, and sending the information that the UE is registered over the second access network to a PCF in the core network, and the PCF in the core network determining routing rule information of the existing PDU session and providing it to the SMF; or the SMF in the core network receiving the information that the UE is registered over the second access network, and determining the routing rule information of the PDU session according to the local policy; and
the SMF in the core network sending a PDU session message to the UE over the second access network, and initiating a user plane tunnel establishment procedure between the second access network and a UPF.

8. The method of claim 6 or 7, wherein the PDU session message comprises: a PDU session identification of the currently existing PDU session of the UE, a PDU session IP address of the currently existing PDU session of the UE, data network information of the currently existing PDU session of the UE, the routing rule information or a quality of service (QoS) rule.

9. The method of claim 3, wherein the step of the core network establishing, for the UE, a PDU connection between a UPF and the same PDU session corresponding to the first access network and the second access network comprises:
a SMF in the core network initiating, when receiving a PDU session establishment request, a policy control procedure to a PCF in the core network, the PCF in the core network determining a routing rule of the PDU session and providing it to the SMF; or the SMF in the core network determining routing rule information of the PDU session according to a local configuration; and
the SMF in the core network initiating a user plane tunnel establishment or update procedure between the second access network interworking function (N3IWF) and the UPF and/or between the first access network and the UPF.

10. The method of claim 9, further comprising:
the SMF in the core network sending a PDU session message to the UE, wherein the PDU session message comprises: a PDU session identification, a PDU session IP address, data network information of the PDU session, a routing rule or a QoS rule.

11. The method of claim 9, wherein after the UE is registered to the core network over the first access network and the second access network, the method further comprises:
if the core network triggers, over the second access network, the UE to initiate a service request over the first access network, the SMF in the core network sending a notification instruction to the UE over the second access network to notify the UE in a first access idle state to initiate the service request over the first access network.

12. A method for implementing multi-access management, comprising:
a UE sending, to a core network, multi-access capability indication information that the UE itself has a multi-access capability; and
the UE processing a PDU session according to signaling sent from the core network over a second access network or a first access network;
wherein the signaling is used to instruct to create/update/delete a PDU connection connected over the first access network or the second access network;
the PDU connections connected over the first access network and the second access network belong to a same PDU session.

13. The method of claim 12, wherein the step of the UE sending, to the core network, the multi-access capability indication information that the UE itself has the multi-access capability comprises:
during a procedure that the UE is registered to an AMF in the core network over the first access network and/or the second access network, the UE sending, to the AMF in the core network, the multi-access capability indication information that the UE itself has the multi-access capability; or
the UE sending, to the AMF in the core network, the multi-access capability indication information about whether the UE itself has the multi-access capability, through a dedicated procedure.

14. A method for implementing multi-access management, comprising:
in a case that a user equipment (UE) has been registered to a core network over a first access network and a second access network and the UE is in a first access network idle state, sending to the UE a notification instruction over the second access network to notify the UE in the first access network idle state to initiate a service request over the first access network.

15. A device for implementing multi-access management, comprising a recognizing module and a processing module, wherein
the recognition module is configured to recognize that a UE has a multi-access capability;
the processing module is configured to:
in a case that the UE to be registered to a core network over a first access network or a second access network, enable the core network to establish a protocol data unit (PDU) connection over the first access network or the second access network, wherein the PUD connection established over the first access network or the second access network and a PDU connection that has been established by the UE over the second access network or the first access network belong to a same PDU session; or
during a procedure that the UE requests to establish a protocol data unit (PDU) session over the first access network or the second access network, enable the core network to establish a PDU connection of the PDU session over the second access network or the first access network simultaneously.

16. The device of claim 15, wherein the processing module is configured to:
enable the UE to be registered to the core network over the second access network or the first access network after the UE is registered to the first access network or the second access network and the PDU session is established; and
establish a PDU connection over the second access network or the first access network according to local policy or a routing rule, wherein the PDU connection established over the second access network or the first access network and a currently existing PDU connection established over the first access network or the second access network belong to a same PDU session.

17. The device of claim 15, wherein the processing module is configured to:
enable the UE to initiate a PDU session over the first access network or the second access network after the UE is registered to the first access network and the second access network; and
establish simultaneously a PDU connection over the second access network or the first access network according to local policy or a routing rule, wherein the PDU connection established over the second access network or the first access network and the PDU connection initiated by the UE over the first access network or the second access network belong to a same PDU session.

18. The device of any of claims 15, 16 or 17, wherein the recognizing module is configured to:
recognize multi-access capability indication information indicating whether the UE itself has the multi-access capability through a registration procedure of the UE or a dedicated procedure.

19. The device of claim 16, wherein the processing module is configured to:
receive a notification from an AMF for notifying of information that the UE is registered over the second access network or the first access network;
send PDU session information to the UE over the second access network or the first access network according the local policy, and initiate a user plane tunnel establishment procedure between the second access network and a UPF or between the first access network and the UPF;
wherein the AMF is an AMF that manages a UE access and mobility status and receives a registration request from the UE over the second access network or the first access network.

20. The device of claim 16, wherein in a case that the UE has a currently existing PDU session established over the second access network, the processing module is configured to:
receive information from an AMF that the UE is registered over the first access network, wherein the AMF is an AMF that manages a UE access and mobility status and receives the information that the UE is registered over the first access network;
send the information that the UE is registered over the first access network to a PCF, and receive routing rule information of the existing PDU session determined by the PCF; or receive the information that the UE is registered over the first access network, and enable a SMF to determine the routing rule information of the PDU session according to the local policy; and
send to the UE a PDU session message over the first access network, and initiate a user plane tunnel establishment procedure between the first access network and a UPF.

21. The device of claim 16, wherein in a case that the UE has a currently existing PDU session established over the first access network, the processing module is configured to:
receive information from an AMF that the UE is registered over the second access network, wherein the AMF is an AMF that manages a UE access and mobility status and receives the information that the UE is registered over the second access network;
send the information that the UE is registered over the second access network to a PCF, and receive routing rule information of the existing PDU session determined by the PCF; or receive the information that the UE is registered over the second access network, and enable a SMF to determine the routing rule information of the PDU session according to the local policy; and
send to the UE a PDU session message over the second access network, and initiate a user plane tunnel establishment procedure between the second access network and a UPF.

22. The device of claim 20 or 21, wherein the PDU session message comprises: a PDU session identification of the currently existing PDU session, a PDU session IP address of the currently existing PDU session, data network information of the currently existing PDU session, the routing rule information or a QoS rule.

23. The device of claim 17, wherein in a case that the UE has been registered to the core network over the second access network and the first access network currently, the processing module is configured to:
when receiving a PDU session establishment request, initiate a policy control procedure to a PCF and receive a routing rule of the PDU session determined by the PCF; or enable a SMF to determine routing rule information of the PDU session according to a local configuration; and
initiate a user plane tunnel establishment or update procedure between the second access network interworking function (N3IWF) and the UPF and/or between the first access network and the UPF.

24. The device of claim 23, wherein the processing module is further configured to:
send a PDU session message to the UE, wherein the PDU session message comprises: a PDU session identification, a PDU session IP address, data network information of the PDU session, a routing rule or a QoS rule.

25. The device of claim 23, wherein after the UE is registered to the core network over the first access network and the second access network, if the UE is in a first access network idle state, and the core network triggers, over the second access network, the UE to initiate a service request over the first access network, the processing module is further configured to:
send a notification instruction to the UE over the second access network to notify the UE in the first access idle state to initiate the service request over the first access network.

26. A device for implementing multi-access management, comprising a notification module and a forwarding module, wherein
the notification module is configured to recognize, by a registration procedure of a UE, and notify a SMF whether the UE has a multi-access capability;
the forwarding module is configured to manage a UE access and mobility status, and, when receiving a registration request from the UE over a second access network or a first access network, notify a SMF that manages a currently existing PDU session of the UE of information that the UE is registered over the second access network or the first access network.

27. The device of claim 26, wherein in a case that the UE has a currently existing PDU session established over the second access network, the forwarding module is configured to:
when receiving information that the UE is registered over the first access network, send the information that the UE is registered over the first access network to the SMF that manages a currently existing PDU session.

28. The device of claim 26, wherein in a case that the UE has a currently existing PDU session established over the first access network, the forwarding module is configured to:
when receiving information that the UE is registered over the second access network, send the information that the UE is registered over the second access network to the SMF that manages a currently existing PDU session.

29. The device of claim 26, wherein the notification module is further configured to: achieve that the UE is registered to a core network over the first access network and/or the second access network, and acquire, in the registration procedure or a dedicated procedure, multi-access capability indication information indicating that the UE itself has a multi-access capability.

30. A device for implementing multi-access management, comprising: a sending module and an execution module; wherein
the sending module is configured to send, to a core network, multi-access capability indication information indicating that a UE to which the device belongs has a multi-access capability;
the execution module is configured to process a PDU session according to signaling sent from the core network over a second access network or a first access network;
wherein the signaling is used to instruct to create/update a PDU connection connected over the second access network or the first access network;
the PDU connections over the first access network and the second access network belong to a same PDU session.

31. The device of claim 30, wherein the sending module is configured to:
during a procedure of registration to an AMF in the core network over the first access network and/or the second access network, send, to the AMF in the core network, the multi-access capability indication information that the UE to which the device belongs has the multi-access capability; or
send, to the AMF in the core network, the multi-access capability indication information about whether the UE to which the device belongs has the multi-access capability, through a dedicated procedure.

32. A computer storage medium storing therein a computer program which is capable of, when executed, achieving the method for implementing multi-access management provided by any of claims 1 to 11, 12 to 13 or 14.
